# EUROPÄISCHE PATENTSCHRIFT

(11) **EP 0 813 642 B1**
(45) Veröffentlichungstag und Bekanntmachung des Hinweises auf die Patenterteilung: **31.07.2002**
(21) Anmeldenummer: 96946066.6
(22) Anmeldetag: 11.12.1996
(51) Int. Cl.: E04H 13/00, F16B 5/02, F16M 7/00

(54) **GRABMAL**
GRAVESTONE ASSEMBLY
ENSEMBLE PIERRE TOMBALE

(30) Priorität: 12.12.1995 DE 19546278
(43) Veröffentlichungstag der Anmeldung: 29.12.1997
(73) Patentinhaber: Frank-System-Dübel GmbH, 61231 Bad Nauheim (DE)
(72) Erfinder: Frank-System-Dübel GmbH, 61231 Bad Nauheim (DE)
(74) Vertreter: Schlagwein, Udo, Dipl.-Ing.
(86) Internationale Anmeldenummer: DE9602373
(87) Internationale Veröffentlichungsnummer: WO9721891

(56) Entgegenhaltungen:
- DE-A- 3 718 056
- FR-A- 2 651 815

## Beschreibung

Die Erfindung betrifft ein Grabmal mit einem Sockel und einem darauf mit einer Befestigungseinrichtung lösbar befestigten Grabstein, welcher in seiner Unterseite eine Gewindebohrung hat.

Ein Grabmal der vorstehenden Art ist Gegenstand der DE-A-36 16 012. Diese Schrift beschreibt ein Grabmal, bei dem ein Grabstein auf einem Sockel durch geringes Verschieben mit Verriegelungsnasen eine Verriegelungsöffnung hintergreift. Ein solches Grabmal erlaubt es, den Grabstein auf einfache Weise mit dem Sockel zu verbinden und ebenso einfach ihn bei Bedarf wieder vom ihm zu lösen. Als nachteilig hat sich jedoch herausgestellt, dass die Mittel zum lösbaren Befestigen des Grabsteins auf dem Sockel mit hoher Genauigkeit gefertigt werden müssen und dass es beim Aufsetzen des Grabsteins auf den Sockel leicht zu einer Beschädigung der Verriegelungsnasen kommen kann, indem diese durch das Gewicht des Grabsteins verbogen werden.

Die genannte DE-A-36 16 012 beschreibt als Stand der Technik auch ein Grabmal, bei dem von unten her durch den Sockel eine Schraube in eine Gewindebohrung des Grabsteins geschraubt wird. Ein solches Grabmal hat den Nachteil, dass zum Einsetzen und Festziehen der Schraube unterhalb des Sockels ein großer Freiraum geschaffen werden muss. Das erfordert einen sehr weitgehenden Eingriff in ein vorhandenes Grab, wenn der Grabstein zur nachträglichen Beschriftung vorübergehend vom Sockel entfernt und zum Steinmetz transportiert werden soll.

Ferner wird in DE-A-3 718 056 ein Grabmal beschrieben, das einen Sockel, einen Grabstein mit einer Gewindebohrung an seiner Unterseite und eine Gewindespindel aufweist.

Der Erfindung liegt das Problem zugrunde, ein Grabmal der eingangs genannten Art zu entwickeln, bei dem der Grabstein zuverlässig mit dem Sockel lösbar verbunden ist, ohne dass unterhalb des Sockels zum Verbinden ein großer Freiraum geschaffen werden muss und ohne dass die Gefahr einer Beschädigung der Befestigungseinrichtung beim Aufsetzen des Grabsteins auf den Sockel besteht.

Dieses Problem wird erfindungsgemäß dadurch gelöst, dass im Sockel eine Gewindespindel angeordnet ist, welche bei nicht aufgesetztem Grabstein durch eine Feder in eine auf der Seite des Grabsteins aus dem Sockel ragende und durch einen Anschlag festgelegte Stellung vorgespannt und mit ihrem oberen, aus dem Sockel ragenden Ende gegen die Kraft der Feder in den Sockel hinein verschiebbar ist und dass zum Einschrauben des nach oben hin aus dem Sockel ragenden Endes der Gewindespindel in die Gewindebohrung die Gewindespindel nach unten hin aus dem Sockel ragt und dort zum Angriff einer Verdreheinrichtung ausgebildet ist.

Bei einem solchen Grabmal braucht man zum Befestigen oder Lösen des Grabsteins unterhalb des Sockels keinen großen Freiraum vorzusehen, um eine Schraube durch den Sockel bis in den Grabstein einzuführen, da die hierzu vorgesehene Spindel stets eine Einheit mit dem Sockel bildet. Um diese Gewindespindel unterhalb des Sockels mit einer Verdreheinrichtung zu verdrehen, ist nur ein relativ geringer Freiraum erforderlich. Dadurch, dass gemäß der Erfindung die Gewindespindel durch eine Feder nach oben hin vorgespannt ist, wird sie beim Aufsetzen des Grabsteins in den Sockel hineingedrückt, so dass sie nicht beschädigt werden kann. Die Vorspannung der Gewindespindel bewirkt jedoch, dass bei einem Verdrehen der Gewindespindel diese sich in die Gewindebohrung des Grabsteins einschraubt und bei Erreichen ihres Anschlags den Grabstein fest auf den Sockel zieht.

Die Sockel von Grabmalen haben oftmals eine unterschiedliche Höhe. Das könnte man durch Verwendung unterschiedlich langer Gewindespindeln ausgleichen. Man kann jedoch auch für unterschiedlich hohe Sockel stets die gleiche Befestigungseinrichtung mit einer stets gleich langen Gewindespindel verwenden, wenn gemäß einer vorteilhaften Weiterbildung der Erfindung die Gewindespindel mit ihrem unteren Bereich in ein in einem Fundament des Grabmals einzusetzenden Fundamentrohr mit Innengewinde eintaucht und wenn der den aus dem Sockel ragenden Bereich der Gewindespindel festlegende Anschlag durch eine in das Innengewinde des Fundamentrohres geschraubte, Außengewinde aufweisende Rundmutter festgelegt ist, durch die die Gewindespindel mit Spiel führt und gegen die die Gewindespindel von unten her mit einem Kopf bewegbar ist.

Die Herstellungskosten für die Befestigungseinrichtung sind besonders gering, wenn gemäß einer anderen Weiterbildung der Erfindung der Kopf durch eine auf die Gewindespindel geschraubte und vor Verdrehen gesicherte Mutter gebildet ist.

Ein unbeabsichtigtes Verdrehen der Rundmutter und damit ein Verstellen des Anschlags durch die Drehbewegung der Gewindespindel nach Anlage ihres Kopfes an die Rundmutter lässt sich auf einfache Weise dadurch vermeiden, dass zwischen dem Kopf und der Rundmutter zumindest eine Gleitscheibe angeordnet ist.

Das Verdrehen der Gewindespindel erfordert besonders geringen Aufwand, wenn die Gewindespindel unterhalb des Sockels einen beispielsweise als Sechskant ausgebildeten Verdrehbereich hat. Man kann dann die Gewindespindel mit einem üblichen Maulschlüssel verdrehen, indem man diesen in eine enge Spalte unterhalb des Sockels zur Gewindespindel schiebt.

Der Freiraum unterhalb des Sockels kann ganz besonders klein sein, wenn die Verdreheinrichtung ein an der Unterseite des Sockels angeordnetes Getriebe ist, welches ein Antriebsrad hat, durch das der Verdrehbereich der Gewindespindel axial verschieblich geführt ist. Ein solches Getriebe kann dann mit einer einfachen, in einem Schutzrohr verlegten Stange durch Drehen der Stange betätigt werden, welche unterhalb des Sockels bis beispielsweise zur Rückseite des Sockels führt.

Um ein Eingreifen der Gewindespindel in die Gewindebohrung des Grabsteins zu ermöglichen, ist es erforderlich, dass die Gewindebohrung nach dem Aufsetzen des Grabsteins genau mit der Gewindespindel fluchtet. Das lässt sich gemäß einer anderen Weiterbildung der Erfindung zuverlässig erreichen, wenn an der Unterseite des Grabsteins koaxial zu der Gewindebohrung eine flanschartige, obere Zentrierscheibe mit einem nach unten hin vorspringenden Rand und entsprechend auf der Oberseite des Sockels koaxial zur Gewindespindel eine vom Rand der oberen Zentrierscheibe umgriffene, untere Zentrierscheibe angeordnet ist. Durch diesen Rand tritt der Effekt ein, dass der Grabstein in der richtigen Position hörbar über die untere Zentrierscheibe schnappt und diese eingeschnappte Stellung durch die Höhe der Fuge zwischen der Oberseite des Sockels und der Unterseite des Grabsteins erkennbar ist.

Zur weiteren Vereinfachung des Grabmals trägt es bei, wenn die Gewindebohrung in einer in eine Bohrung des Grabsteins eingesetzten Hülse vorgesehen ist, wenn die obere Zentrierscheibe ebenfalls in diese Bohrung eingreift und wenn die untere Zentrierscheibe in eine den Sockel durchdringende, zum Durchführen der Gewindespindel bestimmte Bohrung fixiert ist.

Die Spannkraft der die Gewindespindel nach oben hin vorspannenden Feder verändert sich durch Verstellung des Anschlags zur Anpassung an Sockel unterschiedlicher Höhe, wenn gemäß einer anderen Weiterbildung der Erfindung am Anschlag innerhalb des Fundamentrohres an der dem Grabstein abgewandten Seite ein die Feder aufnehmender Federtopf befestigt ist, gegen dessen Boden die Feder sich abstützt. Eine solche Ausführungsform ermöglicht es, unabhängig von der Höhe des Sockels stets eine gleich lange Feder zu verwenden.

Günstig ist es auch, wenn der Anschlag ein axial federndes Bauteil ist. Dadurch wird erreicht, dass die Vorspannung des Grabsteins zum Sockel hin mittels der Gewindespindel auch bei Temperaturschwankungen erhalten bleibt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine teilweise geschnitten dargestellte Vorderansicht eines erfindungsgemäßen Grabmals,
- Fig.2: einen senkrechten Schnitt durch einen oberen Bereich einer Befestigungseinrichtung für den Grabstein des Grabmals,
- Fig.3: einen senkrechten Schnitt durch einen unteren Bereich der Befestigungseinrichtung.

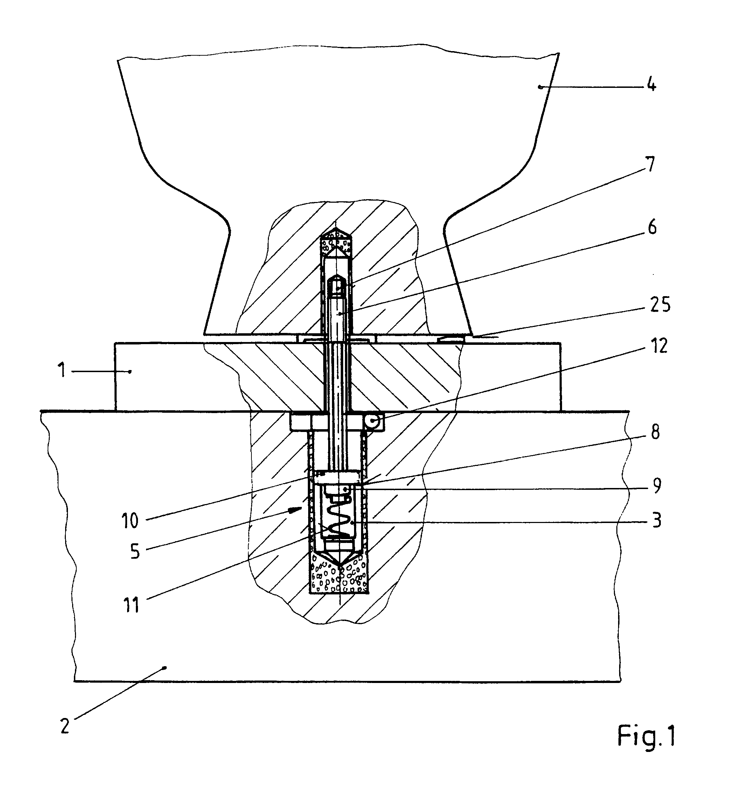

Das in Figur 1 gezeigte Grabmal hat einen Sockel 1, der von einem Betonfundament 2 getragen wird. Auf dem Sockel 1 steht ein Grabstein 4, der dort durch eine Befestigungseinrichtung 5 lösbar gehalten ist. Diese Befestigungseinrichtung 5 hat eine Gewindespindel 6, die in eine Gewindebohrung 7 des Grabsteins 4 geschraubt ist. Diese Gewindespindel 6 durchdringt den Sockel 1 und ragt mit ihrem unteren Ende in ein Fundamentrohr 8. An ihrem unteren Ende hat die Gewindespindel 6 einen Kopf 9, der in der dargestellten Position von unten her gegen einen Anschlag 10 im Fundamentrohr 8 anliegt. Der Anschlag 10 könnte auch am oberen Ende des Fundamentrohres 8 vorgesehen sein. Auch kann es sich bei ihm um ein axial federndes Bauteil handeln. Eine als Druckfeder ausgebildete Feder 11 stützt sich von unten her gegen diesen Kopf 9 und mit ihrem anderen Ende gegen den Boden eines Federkorbes 3, welcher fest mit dem Anschlag 10 verbunden ist. Dadurch stützt sich die Feder 11 wirkungsmäßig am Fundamentrohr 8 ab und spannt die Gewindespindel 6 stets nach oben hin vor. Zum Verdrehen der Gewindespindel 6 dient eine bei diesem Ausführungsbeispiel als Untersetzungsgetriebe ausgebildete Verdreheinrichtung 12, welche unmittelbar unterhalb des Sockels 1 angeordnet ist.

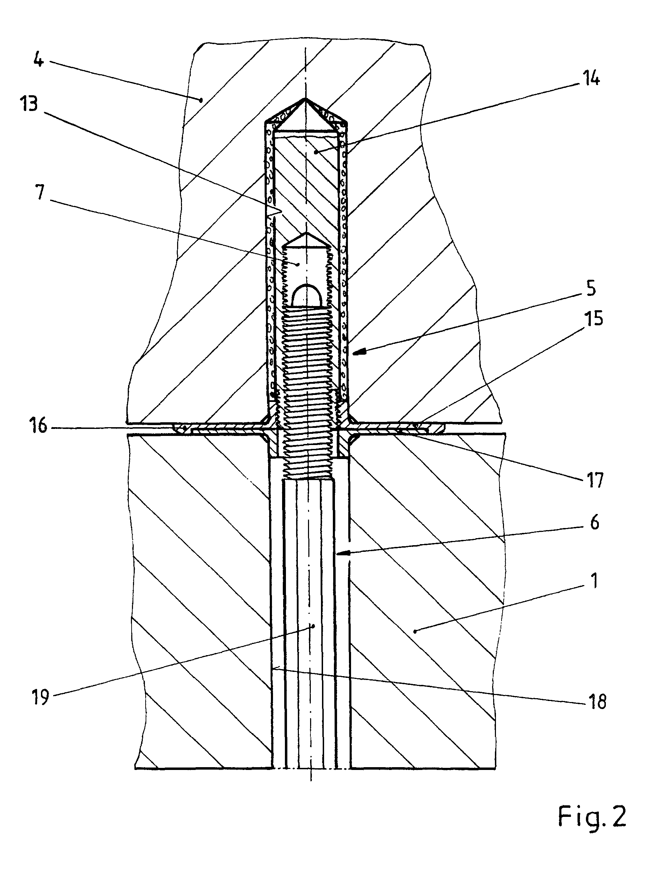

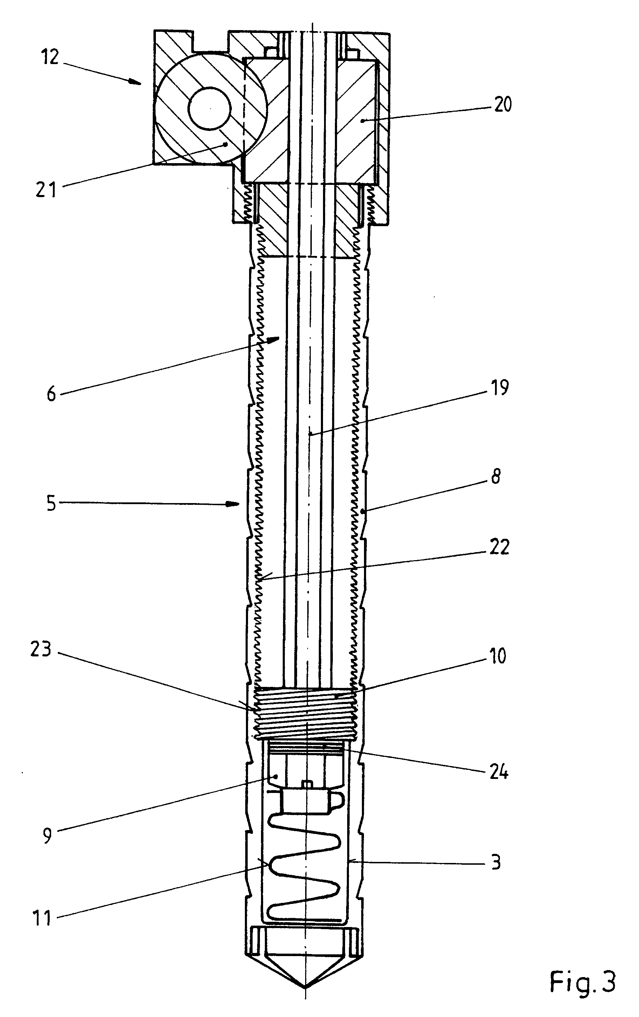

Die Figuren 2 und 3 zeigen gegenüber Figur 1 im Maßstab vergrößert die Befestigungseinrichtung 5, wobei der in Figur 2 gezeigte Bereich sich unmittelbar oberhalb des in Figur 3 gezeigten Bereichs anschließt. Die Figur 2 lässt erkennen, dass von unten her in den Grabstein 4 eine Bohrung 13 führt, in die eine Hülse 14 eingeklebt ist. Diese Hülse 14 weist die nach unten hin offene Gewindebohrung 7 auf, in welche die Gewindespindel 6 geschraubt ist. Ebenfalls von unten her ist in der Bohrung 13 eine flanschartige, obere Zentrierscheibe 15 fixiert. Diese hat einen umlaufenden, nach unten hin vorspringenden Rand 16, mit dem sie über eine untere Zentrierscheibe 17 greift, die in einer Bohrung 18 des Sockels 1 fixiert ist. Durch diese Zentrierscheiben 15, 17 wird sichergestellt, dass die Gewindespindel 6 genau mit der Gewindebohrung 7 fluchtet, wenn der Grabstein 4 richtig auf den Sockel 1 aufgesetzt ist. Die Figur 2 zeigt weiterhin, dass die Gewindespindel 6 unterhalb des Grabsteins 4 einen als Sechskant ausgebildeten Verdrehbereich 19 hat, der bis unterhalb des Sockels 1 reicht, was die Figur 3 zeigt.

Die Figur 3 verdeutlicht, dass die Gewindespindel 6 mit diesem Verdrehbereich 19 durch ein Antriebsrad 20 der Verdreheinrichtung 12 geführt ist. Dabei ist die Durchführung so gestaltet, dass sich die Gewindespindel 6 axial zum Antriebsrad 20 bewegen kann. Angetrieben wird das Antriebsrad 20, welches beispielsweise als Schneckenrad ausgebildet sein kann, von einer Schnecke 21, die ihrerseits von einer nicht gezeigten, in einem Rohr verlegten Stange mittels eines Werkzeugs verdreht werden kann. Die Verdreheinrichtung 12 kann auch anders gestaltet sein. Möglich ist es auch, die Gewindespindel 6 im Verdrehbereich 19 mittels eines üblichen Maulschlüssels zu verdrehen.

Ebenfalls zu sehen ist in Figur 3 das Fundamentrohr 8. Dieses hat Innengewinde 22, in welches der als Rundmutter ausgebildete Anschlag 10 mit Außengewinde 23 geschraubt ist. Dadurch wird es möglich, durch mehr oder minder weites Einschrauben des Anschlags 10 in das Fundamentrohr 8 das obere Ende der Gewindespindel 6 mehr oder minder weit nach oben zu bewegen, um sich unterschiedlichen Höhen des Sockels 1 anpassen zu können. Zu erkennen ist in Figur 3 auch der Federkorb 3, welcher mit dem als Rundmutter ausgebildeten Anschlag 10 durch eine Schraubverbindung verbunden ist. Der Kopf 9 ist als Mutter ausgebildet, die ebenfalls auf die Gewindespindel 6 geschraubt ist und auf nicht gezeigte Weise gegen Verdrehen gesichert sein muss. Zwischen dem Kopf 9 und dem Anschlag 10 sind mehrere Gleitscheiben 24 angeordnet, welche verhindern, dass der Kopf 9 bei Drehung der Gewindespindel 6 den Anschlag 10 mit verdreht und dadurch verstellt.

Solange der in Figur 1 gezeigte Grabstein 4 noch nicht auf dem Sockel 1 aufgesetzt ist, ragt die Gewindespindel 6 mit ihrem Gewindeende nach oben hin aus dem Sockel 1. Setzt man den Grabstein 4 in die in Figur 1 dargestellte Position auf den Sockel 1, so wird die Gewindespindel 6 zunächst gegen die Kraft der Feder 11 in den Sockel 1 hineingedrückt. Anschließend verdreht man die Gewindespindel 6 mittels der Verdreheinrichtung 12 und schraubt dabei die Gewindespindel 6 in die Gewindebohrung 7. Sobald der Kopf 9 dabei gegen den Anschlag 10 gelangt ist, zieht die Gewindespindel 6 den Grabstein 4 nach unten zum Sockel 1 hin, wodurch eine feste Verbindung entsteht. Stellt man fest, dass der Grabstein im Endzustand schief steht, dann kann man diese Verbindung geringfügig lösen und zwischen dem Grabstein 4 und dem Sockel 1 in eine dort vorhandene Fuge 25 nicht gezeigte Unterlegstücke einschieben und dann die Gewindespindel 6 erneut festziehen.

### Bezugszeichenliste

- 1: Sockel
- 2: Betonfundament
- 3: Federkorb
- 4: Grabstein
- 5: Befestigungseinrichtung

- 6: Gewindespindel
- 7: Gewindebohrung
- 8: Fundamentrohr
- 9: Kopf
- 10: Anschlag

- 11: Feder
- 12: Verdreheinrichtung
- 13: Bohrung
- 14: Hülse
- 15: Zentrierscheibe

- 16: Rand
- 17: untere Zentrierscheibe
- 18: Bohrung
- 19: Verdrehbereich
- 20: Antriebsrad

- 21: Schnecke
- 22: Innengewinde
- 23: Außengewinde
- 24: Gleitscheibe
- 25: Fuge

## Patentansprüche

1. Grabmal mit einem Sockel (1) und einem darauf mit einer Befestigungseinrichtung (5) lösbar befestigten Grabstein (4), wobei der Grabstein in seiner Unterseite eine Gewindebohrung (7) hat, und wobei im Sockel (1) eine Gewindespindel (6) angeordnet ist, **dadurch gekennzeichnet, dass** die Gewindespindel (6) bei nicht aufgesetztem Grabstein (4)durch eine Feder (11) in eine auf der dem Grabstein (4) zugewandten Seite aus dem Sockel (1) ragende und durch einen Anschlag (10) festgelegte Stellung vorgespannt und mit ihrem oberen, aus dem Sockel (1) ragenden Ende gegen die Kraft der Feder (11) in den Sockel (1) hinein verschiebbar ist, und dass zum Einschrauben des nach oben hin aus dem Sockel (1) ragenden Endes der Gewindespindel (6) in die Gewindebohrung (7) die Gewindespindel (6) nach unten hin aus dem Sockel (1) ragt und dort zum Angriff einer Verdreheinrichtung (12) ausgebildet ist.

2. Grabmal nach Anspruch 1, **dadurch gekennzeichnet, dass** die Gewindespindel (6) mit ihrem unteren Bereich in ein in einem Fundament des Grabmals einzusetzenden Fundamentrohr (8) mit Innengewinde (22) eintaucht und dass der den aus dem Sockel (1) ragenden Bereich der Gewindespindel (6) festlegende Anschlag (10) durch eine in das Innengewinde (22) des Fundamentrohres (8) geschraubte, Außengewinde (23) aufweisende Rundmutter festgelegt ist, durch die die Gewindespindel (6) mit Spiel führt und gegen die die Gewindespindel (6) von unten her mit einem Kopf (9) bewegbar ist.

3. Grabmal nach Anspruch 2, **dadurch gekennzeichnet, dass** der Kopf (9) durch eine auf die Gewindespindel (6) geschraubte und vor Verdrehen gesicherte Mutter gebildet ist.

4. Grabmal nach den Ansprüchen 2 oder 3, **dadurch gekennzeichnet, dass** zwischen dem Kopf (9) und dem als Rundmutter ausgebildeten Anschlag (10) zumindest eine Gleitscheibe (24) angeordnet ist.

5. Grabmal nach zumindest einem der vorangehenden Ansprüche, **dadurch gekennzeichnet, dass** die Gewindespindel (6) unterhalb des Sockels (1) einen beispielsweise als Sechskant ausgebildeten Verdrehbereich (19) hat.

6. Grabmal nach zumindest einem der vorangehenden Ansprüche, **dadurch gekennzeichnet, dass** die Verdreheinrichtung (12) ein an der Unterseite des Sockels (1) angeordnetes Getriebe ist, welches ein Antriebsrad (20) hat, durch das der Verdrehbereich der Gewindespindel (6) axial verschieblich geführt ist.

7. Grabmal nach zumindest einem der vorangehenden Ansprüche, **dadurch gekennzeichnet, dass** an der Unterseite des Grabsteins (4) koaxial zu der Gewindebohrung (7) eine flanschartige, obere Zentrierscheibe (15) mit einem nach unten hin vorspringenden Rand (16) und entsprechend auf der Oberseite des Sockels (1) koaxial zur Gewindespindel (6) eine vom Rand (16) der oberen Zentrierscheibe (15) umgriffene, untere Zentrierscheibe (17) angeordnet ist.

8. Grabmal nach Anspruch 7, **dadurch gekennzeichnet, dass** die Gewindebohrung (7) in einer in eine Bohrung (13) des Grabsteins (4) eingesetzten Hülse (14) vorgesehen ist, dass die obere Zentrierscheibe (15) ebenfalls in diese Bohrung (13) eingreift und dass die untere Zentrierscheibe (17) in eine den Sockel (1) durchdringende, zum Durchführen der Gewindespindel (6) bestimmte Bohrung (18) fixiert ist.

9. Grabmal nach zumindest einem der vorangehenden Ansprüche 2-8, **dadurch gekennzeichnet, dass** am Anschlag (10) innerhalb des Fundamentrohres (8) an der dem Grabstein (4) abgewandten Seite ein die Feder (11) aufnehmender Federtopf (3) befestigt ist, gegen dessen Boden die Feder (11) sich abstützt.

10. Grabmal nach zumindest einem der vorangehenden Ansprüche, **dadurch gekennzeichnet, dass** der Anschlag (10) ein axial federndes Bauteil ist.

## Claims

1. Monument with a plinth (1) and a gravestone (4) releasably mounted thereon by a mounting device (5), wherein the gravestone has a threaded bore (7) in its underside and a threaded spindle (6) is arranged in the plinth (1), **characterized in that** when the gravestone (4) is not erected the threaded spindle (6) is urged by a spring (11) into a position, defined by an end stop (10), in which it projects from the plinth (1) on the side towards the gravestone (4) and can be pushed into the plinth (1) against the force of the spring (11) by its end projecting from the plinth (1), and **in that** the threaded spindle (6) projects downwards from the plinth (1) where it is configured so as to be engageable by a turning device (12) to screw the end of the threaded spindle (6) projecting upwards from the plinth (1) into the threaded bore (7).

2. Monument according to Claim 1, **characterized in that** the lower part of the threaded spindle (6) reaches into a foundation tube (8) with female thread (22) for setting in a foundation of the monument and **in that** the end stop (10) defining the region of the threaded spindle (6) projecting from the plinth (1) is defined by a round nut with a male thread (23) screwed into the female thread (22) of the foundation tube (8), which guides the threaded spindle (6) with play and against which the threaded spindle can be moved from below by a head (9).

3. Monument according to Claim 2, **characterized in that** the head (9) is formed by a nut screwed on to the threaded spindle (6) and locked against turning thereon.

4. Monument according to Claim 2 or Claim 3, **characterized in that** at least one washer (24) is arranged between the head (9) and the end stop (10) configured as a round nut.

5. Monument according to at least one of the preceding claims, **characterized in that** the threaded spindle (6) has a turning region (19), configured e.g. as a hexagon, below the plinth (1).

6. Monument according to at least one of the preceding claims, **characterized in that** the tuming device (12) is a gear arranged on the underside of the plinth (1) which has a drive wheel (20) by which the tuming region of the threaded spindle (6) is axially displaceably guided.

7. Monument according to at least one of the preceding claims, **characterized in that** a flange-like upper centring disc (15) with a downwards projecting rim (16) is arranged on the underside of the gravestone (4) coaxially with the threaded bore (7) and a lower centring disc (17) clasped by the rim (16) of the upper centring disc (15) is correspondingly arranged on the upper side of the plinth (1) coaxially with the threaded spindle (6).

8. Monument according to Claim 7, **characterized in that** the threaded bore (7) is provided in a sleeve (14) inserted into a bore (13) in the gravestone (4), **in that** the upper centring disc (15) also engages in this bore (13) and **in that** the lower centring disc (17) is fixed into a bore (18) passing through the plinth (1) and intended to serve as leadthrough for the threaded spindle (6).

9. Monument according to at least one of the preceding claims 2-8, **characterized in that** a spring pot (3) which holds the spring (11), and against the end of which the spring (11) bears, is fixed to the end stop (10) inside the foundation tube (8), on the side facing away from the gravestone (4).

10. Monument according to at least one of the preceding claims, **characterized in that** the end stop (10) is an axially resilient component.

## Revendications

1. Monument funéraire comprenant un socle (1) et une pierre tombale (4) fixée sur ce dernier de façon démontable au moyen d'un dispositif de fixation (5), dans lequel la pierre tombale présente un perçage fileté (7) dans sa face inférieure, et dans lequel une tige filetée (6) est disposée dans le socle (1), **caractérisé en ce que**, lorsque la pierre tombale (4) n'est pas posée, la tige filetée (6) est précontrainte par un ressort (11) pour prendre une position en saillie en dehors du socle (1) sur le côté dirigé vers la pierre tombale (4), déterminée par une butée (10), et peut être enfoncée dans le socle (1) avec extrémité supérieure qui fait saillie en dehors du socle (1), à l'encontre de la force du ressort (11), et **en ce que**, pour le vissage de l'extrémité de la tige filetée (6) qui fait saillie vers le haut en dehors du socle (1) dans le perçage fileté (7), la tige filetée (6) fait saillie vers le bas en dehors du socle (1) et, à cet endroit, est configurée pour entrer en prise avec un dispositif d'entraînement en rotation (12).

2. Monument funéraire selon la revendication 1, **caractérisé en ce que**, par sa région inférieure, la tige filetée (6) plonge dans un tube de fondation (8) à filetage intérieur (22), destiné à être encastré dans une fondation du monument funéraire et **en ce que** la butée (10) qui détermine la région de la tige filetée (6) qui fait saillie en dehors du socle (1) est déterminée par un écrou rond à filetage extérieur (23), vissé dans le filetage intérieur (22) du tube de fondation (8), à travers lequel la tige filetée (6) passe avec jeu et contre lequel la tige filetée (6) peut venir s'appuyer de bas en haut par une tête (9).

3. Monument funéraire selon la revendication 2, **caractérisé en ce que** la tête (9) est constituée par un écrou vissé sur la tige filetée (6) et freiné à l'encontre de la rotation.

4. Monument funéraire selon la revendication 2 ou 3, **caractérisé en ce qu'**au moins une rondelle de glissement (24) est disposée entre la tête (9) et la butée (10) constituée par un écrou rond.

5. Monument funéraire selon une des revendications précédentes, **caractérisé en ce que** la tige filetée (6) possède, au-dessous du socle (1), une région d'entraînement en rotation (19) constituée, par exemple, par un six pans.

6. Monument funéraire selon une des revendications précédentes, **caractérisé en ce que** le dispositif d'entraînement en rotation (12) est un mécanisme disposé au niveau de la face inférieure du socle (1), qui possède une roue d'entraînement (20) à travers laquelle la région d'entraînement en rotation de la tige filetée (6) est enfilée mobile en translation axiale.

7. Monument funéraire selon au moins une des revendications précédentes, **caractérisé en ce qu'**au niveau de la face inférieure de la pierre tombale (4), est disposée, coaxialement au perçage fileté (7), une rondelle de centrage supérieure (15) du type bride, munie d'un bord (16) en saillie vers le bas et, d'une façon correspondante, une rondelle de centrage inférieure (17) entourée par le bord (16) de la rondelle de centrage supérieure (15) est disposée sur la face supérieure du socle (1) coaxialement à la tige filetée (6).

8. Monument funéraire selon la revendication 7, **caractérisé en ce que** le perçage fileté (7) est prévu dans une douille (14) encastrée dans un perçage (13) de la pierre tombale (4), **en ce que** la rondelle de centrage supérieure (15) est de même engagée dans ce perçage (13) et **en ce que** la rondelle de centrage inférieure (17) est fixée dans un perçage (18) qui traverse le socle (1) et qui est destiné au passage de la tige filetée (6).

9. Monument funéraire selon au moins une des revendications précédentes 2-8, **caractérisé en ce qu'**à la butée (10) est fixé, à l'intérieur du tube de fondation (8), sur le côté qui est à l'opposé de la pierre tombale (4), un godet de ressort (3) qui reçoit le ressort (11) et contre le fond duquel le ressort (11) s'appuie.

10. Monument funéraire selon au moins une des revendications précédentes, **caractérisé en ce que** la butée (10) est un élément possédant une élasticité axiale.
